## Europäisches Patentamt
## European Patent Office
## Office européen des brevets

(19)

(11) Numéro de publication: **0 022 413**
**B1**

(12) **FASCICULE DE BREVET EUROPEEN**

(45) Date de publication du fascicule du brevet: **02.06.82**

(51) Int. Cl.³: **F 02 N 11/08, H 02 K 23/20**

(21) Numéro de dépôt: **80401018.9**

(22) Date de dépôt: **04.07.80**

(54) **Démarreur électrique pour moteurs à combustion interne, notamment pour véhicules automobiles.**

(30) Priorité: **05.07.79 FR 7917445**

(43) Date de publication de la demande:
**14.01.81 Bulletin 81/2**

(45) Mention de la délivrance du brevet:
**02.06.82 Bulletin 82/22**

(84) Etats contractants désignés:
**BE DE GB IT**

(56) Documents cités:
**FR - A - 2 366 735**
**US - A - 1 571 908**

(73) Titulaire: **DUCELLIER & Cie**
**Echat 950**
**F-94024 Créteil Cedex (FR)**

(72) Inventeur: **Heritier Best, Pierre**
**Orbeil F-63500 Issoire (FR)**

(74) Mandataire: **Habert, Roger**
**2, rue Boulle Echat 950**
**F-94024 Créteil Cedex (FR)**

Courier Press, Leamington Spa, England.

Démarreur électrique pour moteurs à combustion interne, notamment pour véhicules automobiles

La présente invention concerne un démarreur électrique à contacteur électromagnétique, équipant les moteurs à combustion interne, notamment de véhicules automobiles.

Dans ce type de démarreurs, le contacteur électromagnétique dit — "Solénoïde" est lié à un levier pivotant à fourche, lequel levier assure la mise en prise du pignon avec la couronne dentée du moteur à combustion interne.

Un ressort travaillant à la compression ou à l'extension, suivant son emplacement permet par son action, dans le cas où une dent du pignon vient à buter dans une dent de la couronne, de relier la batterie de démarrage au circuit électrique du démarreur par l'intermédiaire du contacteur électromagnétique afin de provoquer la rotation du démarreur et conséquemment la pénétration du pignon dans la couronne.

Afin de réduire la consommation des contacteurs électromagnétiques ceux-ci comportent, dans la majorité des cas, deux enroulement dont l'un dit "d'appel" est court circuité dès l'établissement de la liaison de la batterie de démarrage avec le circuit électrique du démarreur, l'autre enroulement dit "de maintien" est mis hors tension après démarrage du moteur, par la clé de contact.

De tels contacteurs électromagnétiques sont relativement onéreux par le fait que le temps de bobinage et d'isolement des babinages l'un par rapport à l'autre représente une fraction importante du coût total.

La présente invention a pour but de remédier à cet inconvénient et concerne à cet effet un démarreur électrique, pour moteurs à combustion interne, comprenant un contacteur électromagnétique assurant le déplacement axial du pignon entre une position de repos et une position de travail, caractérisé en ce que le contacteur électromagnétique comporte un enroulement unique, lequel enroulement est relié par une de ses extrémités à l'interrupteur de démarrage et par son autre extrémité à un balai auxiliaire dont la tension varie entre une valeur sensiblement nulle, lors de la mise sous tension de l'enroulement, et une tension qui est une fraction de la tension de l'induit lorsque le circuit électrique du démarreur est relié par l'intermediaire du contacteur électromagnétique, à la batterie de démarrage. Le balai auxiliaire est positionné angulairement de manière judicieusement déterminée de façon que la tension présente aux bornes de l'enroulement du contacteur électromagnétique engendre une force de maintien apte à assurer la liaison du circuit électrique du démarreur et de la batterie pendant la phase de démarrage du moteur à combustion interne.

La description qui va suivre en regard des dessins annexés fera mieux comprendre comment l'invention peut être réalisée.

La figure 1 représente un schéma électrique d'un démarreur à contacteur électromagnétique selon l'art antérieur.

La figure 2 représente un schéma électrique d'un démarreur à contacteur électromagnétique selon l'invention.

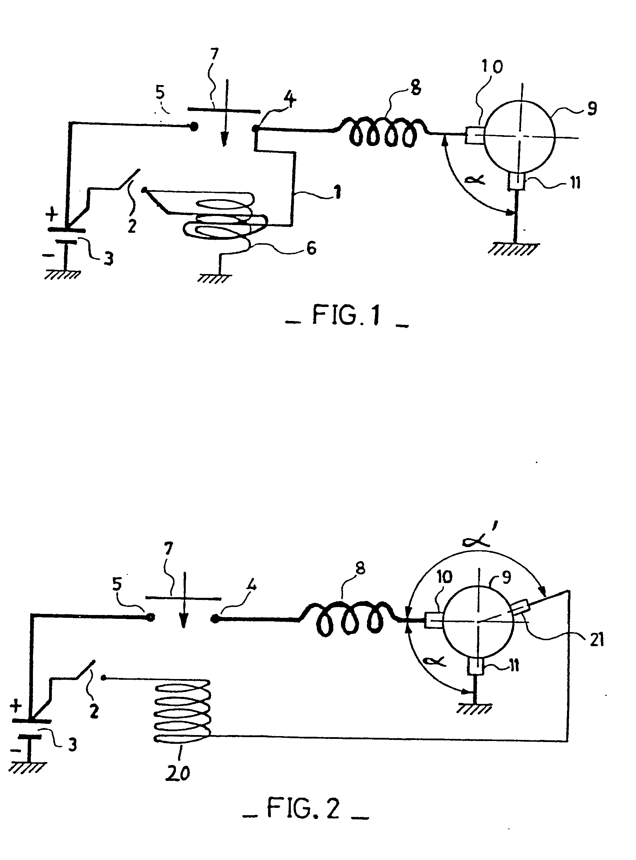

Sur les figures 1 et 2 les éléments assurant les mêmes fonctions sont affectés du même repère.

Dans les démarreurs de l'art antérieur (voir fig. 1) lorsque le contacteur électromagnétique comprend deux enroulements l'un dit — "d'appel" 1, est relié par une de ses extrémités à un interrupteur 2 connecté à la batterie 3 du véhicule, l'autre extrémité de l'enroulement étant reliée à la borne 4, du contacteur électromagnétique lequel est en liaison avec la batterie 3, par l'intermédiaire de la borne 5.

L'enroulement dit "de maintien" 6 est relié par une de ses extrémités à l'interrupteur 2 et par son autre extrémité au pôle négatif. Le contacteur électromagnétique comprend une plaquette de contact 7 qui de façon connue assure, lors de la fermeture de l'interrupteur 2, la mise sous tension du démarreur composé entre autres, des inducteurs 8, de l'induit 9 et des balais 10 et 11.

Dès la mise sous tension du démarreur, par l'intermédiaire de la plaquette de contact 7, l'enroulement "d'appel" 1 est court-circuité, en raison du fait que la tension à ses bornes est sensiblement identique et seul l'enroulement "de maintien" 6 assure la liaison du démarreur et de la batterie 3.

Dès que le démarrage du moteur à combustion interne (non représenté) est effectué, l'ouverture de l'interrupteur 2 provoque la non alimentation de l'enroulement 6, le retour à sa position initiale de la plaquette de contact 7 et conséquemment la mise hors tension du démarreur.

Dans le cas d'un démarreur quatre pôles et deux balais comme représenté par les figures 1 et 2, l'angle $\alpha$ entre les balais 10 et 11 est de 90 degrés.

Selon un mode préféré de réalisation de l'invention, plus particulièrement adapté à un démarreur quatre pôles, deux balais et ayant un induit à 29 conducteurs, le contacteur électromagnétique comporte un enroulement unique 20 (voir fig. 2) relié au pôle positif de la batterie 3, par l'intermédiaire de l'interrupteur 2 et d'autre part au pôle négatif, au travers d'une fraction de l'induit, par l'intermédiaire d'un balai auxiliaire 21.

Lors de la mise sous tension de l'enroulement 20 et en raison du fait que la résistance de l'induit est pratiquement négligeable par rapport à la valeur de la résistance de l'enroulement 20, la tension du balai auxiliaire 21 varie entre une valeur sensiblement nulle et une valeur qui est une fraction de la tension de l'induit 9, lorsque le démarreur est alimenté par la batterie 3, par l'intermédiaire de la plaquette de contact 7 venue en appui sur les bornes 4 et 5.

Dans cet exemple de réalisation, le balai auxiliaire 21 est espacé angulairement de 156 degrés par rapport au balai positif 10, cet angle $\alpha'$ variable en fonction du nombre de conducteurs de l'induit est prédéterminé de façon à ce que la tension aux bornes de l'enroulement 20 qui est une fraction de la tension de l'induit 9, lorsque le démarreur est alimenté par la batterie, engendre une force électromagnétique suffisante pour maintenir la plaquette 7 en appui sur les bornes 4 et 5 pendant la durée de la phase de démarrage du moteur à combustion interne.

En outre le balai auxiliaire 21 est prévu d'une qualité plus résistive que la qualité des balais principaux 10 et 11 de manière à assurer le nettoyage, par abbrasion du collecteur ce qui améliore la constance dans le temps des caractéristiques du démarreur.

En fonction de la description qui précède on conçoit bien qu'à la fermeture de l'interrupteur 2 et pendant un court instant, correspondant au temps que met la plaquette 7 pour venir en appui sur les bornes 4 et 5 l'intensité du courant circulant dans l'enroulement 20 n'est limitée que par la résistance dudit enroulement, laquelle résistance a été déterminée de manière à disposer des ampères-tours nécessaires pour réaliser la fonction des enroulements d'appel et de maintien des contacteurs électromagnétiques de l'art antérieur. Dès que la liaison batterie-démarreur est réalisée par l'intermédiaire de la plaquette de contact 7 venue en appui sur les bornes 4 et 5, un courant en provenance de la batterie traverse les inducteurs 8 et l'induit 9, le potentiel du balai auxiliaire qui était de valeur sensiblement nulle, prend une valeur qui est une fraction de la tension présente aux bornes de l'induit, cette élévation de tension aux bornes du balai auxiliaire 21, réduit l'intensité du courant traversant l'enroulement 20 d'une quantité suffisante pour assurer le maintien en appui de la plaquette 7 sur les bornes 4 et 5 pendant la durée de la phase de démarrage du moteur à combustion interne.

Il est évident pour l'homme de l'art, que la position angulaire du balai auxiliaire 21, dépend du nombre de conducteurs de l'induit et conséquemment du nombre de lames du collecteur.

## Revendications

1. Démarreur électrique pour moteurs à combustion interne, démarreur comprenant un contacteur électromagnétique assurant le déplacement axial du pignon entre une position de repos et une position de travail caractérisé en ce que le contacteur électromagnétique comporte un enroulement unique (20), lequel enroulement (20) est relié par une de ses extrémités à l'interrupteur de démarrage (2) et par son autre extrémité à un balai auxiliaire (21) dont la tension varie entre une valeur sensiblement nulle, lors de la mise sous tension de l'enroulement (20), et une tension qui est une fraction de la tension de l'induit (9) lorsque le circuit électrique (8, 9) du démarreur est relié, par l'intermédiaire du contacteur électromagnétique, à la batterie de démarrage (3).

2. Démarreur électrique selon la revendication 1, caractérisé en ce que le balai auxiliaire (21) est positionné angulairement de manière judicieusement déterminée de façon que la tension présente aux bornes de l'enroulement (20) du contacteur électromagnétique engendre une force de maintien apte à assurer la liaison du circuit électrique (8, 9) du démarreur et de la batterie (3) pendant la phase de démarrage du moteur à combustion interne.

3. Démarreur électrique selon les revendications 1 et 2, caractérisé en ce que, par rapport aux balais principaux (10, 11), le balai auxiliaire (21) est de qualité différente.

## Patentansprüche

1. Elektrischer Anlasser für Verbrennungsmotoren mit einem elektromagnetlischen Schalter zur axialen Verschiebung des Anlasserritzels zwischen einer Ruhepostion und einer Arbeitsposition, dadurch gekennzeichnet, daß der elektromagnetische Schalter eine einzige Wicklung (20) aufweist, die mit einem ihrer Enden an den Anlasserschalter (2) und mit dem anderen Ende an eine Hilfsschleifbürste (21) angeschlossen ist, deren Spannung zwischen einem Wert von im wesentlichen Null zur Zeit des Einschaltens der genannten Wicklung (20) und einem Spannungswert variiert der ein Bruchteil der Spannung des Läufers (9) ist, wenn der elektrische Stromkreis (8, 9) des Anlassers über den elektromagnetischen Schalter mit der Anlasserbatterie (3) verbunden ist.

2. Elektrischer Anlasser nach Anspruch 1, dadurch gekennzeichnet, daß die an den Enden der Wicklung (20) des elektromagnetischen Schalters vorhandene Spannung während der Anlaßphase des Verbrennungsmotors eine Haltekraft erzeugt, welche die Aufrechterhaltung der Verbindung des elektrischen Stromkreises (8, 9) des Anlassers mit der Batterie (3) gewährleistet.

3. Elektrischer Anspruch 1 und 2, dadurch gekennzeichnet, daß die Hilfsschleifbürste (21) andere Materialeigenschaften besitzt als die Hauptschleifbürsten (10, 11).

## Claims

1. An electric starter for internal combustion engines, the starter including an electromagnetic contactor effecting the axial displacement of the pinion between a rest position and an operative position, characterised in that the electromagnet contactor includes a single winding (20), which winding (20) is connected by one of its ends to the starter switch (2) and by its other end to an auxiliary brush (21) of which the voltage varies between a substantially zero value when voltage is supplied to the winding (20), and a voltage which is a fraction of the voltage of the armature (9) when the electrical circuit (8, 9) of the starter is connected, by means of the electromagnetic contactor, to the starter battery (3).

2. An electric starter according to Claim 1, characterised in that the auxiliary brush (21) is positioned angularly in a carefully determined manner such that the voltage present across the winding (20) of the electromagnetic contactor produces a holding force adapted to ensure the connection of the electrical circuit (8, 9) of the starter and the battery (3) during the starting phase of the internal combustion engine.

3. An electric starter according to Claims 1 and 2, characterised in that the auxiliary brush (21) is of a different quality with respect to the main brushes (10, 11).

_ FIG.1 _

_ FIG. 2 _